# EUROPEAN PATENT APPLICATION

(11) **EP 3 739 223 A1**
(43) Date of publication of application: **18.11.2020**
(21) Application number: 20174661.7
(22) Date of filing: 14.05.2020
(51) Int. Cl.: F16B 45/02, F16B 45/00

(54) **CONNECTOR**

(30) Priority: 14.05.2019 GB 201906776
(71) Applicant: Excalibur (Wales) Ltd, Llanberis, Gwynedd LL55 4EL (GB)
(72) Inventor: Tanner, Elliot James, Montgomery SY15 6DZ (GB)
(74) Representative: Hamilton, Alistair

(57) **Abstract**

A connector for use in e.g., rigging systems is disclosed. The connector has a body (10) and a basket (12) that is pivotable about a basket axis between a closed position in which it forms a closed loop with the body and an open position in which it has a free end that projects from the body. A locking member (14) is operable to retain the basket (12) in the closed position. A loading force applied to the basket (12) is resisted by the locking member which is disposed to act on the basket with a mechanical advantage over the loading force. The basket typically has a curved bight portion from which a stem extends. A pivot axle (38) connects the basket (12) to the body (10) close to an end portion of the bight. Therefore, a loading force on the bight and the locking (14) member apply couples to the basket about the pivot axle in opposite directions, but the couple is applied by the locking element at a distance from the pivot axle greater than the distance of the loading force. Such a connector will not disconnect under any circumstances unless the user decides intentionally to effect disconnection but will reliably disconnect should the user require it so to do.

## Description

The present invention relates to a connector. In particular, it relates to a connector that is suitable for use as a component in a safety suspension or a rigging system for climbing or working at height or for load hauling. Such a connector is typically used to releasably connect a variety of components such as an elongate tensile element (e.g., a cable, a rope or webbing) to a carabiner, another connector or another device (e.g., an ascender or descender).

Connectors being for use in rigging systems must, above all, be secure, and must not disconnect under any circumstances unless the user decides intentionally to effect disconnection. However, there are also situations in which it is desirable that a user can disconnect the connector promptly, even if it is under load. This can arise when a user is in a hazardous environment from which they might have to escape quickly. Many conventional connectors are difficult or impossible to release when under load, so are not suitable for use in such applications.

The two requirements - secure connection and reliable release - are, at first sight, conflicting: an aim of this invention is to provide a connector that meets both of them.

To this end, from a first aspect, this invention provides a connector comprising:
a body;
a basket that is pivotable between a closed position in which it forms a closed loop with the body and an open position in which it has a free end that projects from the body away from a first attachment point;
a locking member that is operable to retain the basket in the closed position; wherein
a loading force applied to the basket is resisted by the locking member which is disposed to act on the basket with a mechanical advantage over the loading force.

The basket typically has a curved bight portion from which a stem extends. A pivot axle may connect the basket to the body close to a free end portion of the curved bight portion. The basket is therefore configured such that a loading force applied to the bight applies a couple to the basket about the pivot axle in a first direction while the locking member applies a couple to the basket about the pivot axle in an opposite direction, but the couple is applied by the locking element at a distance from the pivot axle greater than the distance of the loading force. This means that the force applied by the locking element is less than the loading force to generate an equal couple. In the closed position, the locking member typically makes contact with a locking surface which may be close to a free end of the stem.

The locking element may be carried on a locking lever. The locking lever is typically pivotally connected to the body; it may be and pivotable about a locking axis between a locked position and an unlocked position. Preferably, the locking surface is arcuate, and may be centred upon the locking axis. The locking axis is typically parallel with the basket axis. A connector embodying the invention may further include a removable locking pin, which pin, when installed on the connector, prevents movement of the locking lever. Alternatively or additionally, it may include a safety lever carried on the body that can be activated by moving it to a locked position in which it prevents movement of the locking lever.

The locking element is typically a cylinder which may advantageously be mounted for rotation about an axis that is parallel to the basket axis.

A connector embodying the invention typically further includes an attachment point that is fast with the body. For example, the attachment point may include an axle that extends between two webs. In the open position, the basket may project away from the attachment point.

The basket may taper in cross-section in a direction away from the basket axis.

A tension spring may be provided that urges the locking lever towards the locking position.

The locking member may be disposed to act on the basket with a mechanical advantage over the loading force by a factor of 2, 4, 6, 8 or more.

In some embodiments, the body includes an abutment that prevents or limits movement of the basket into the body past the closed position. Such an abutment may include a plate disposed to make contact along a length of the basket in the event that the basket is moved past the closed position.

An embodiment of the invention will now be described in detail, by way of example, and with reference to the accompanying drawings, in which:
Figures 1 to 4 are general views of a connector being a first embodiment of the invention in a closed and locked condition;
Figure 5 shows the first embodiment of the invention in a released and open condition;
Figure 6 is a partially exploded view of the first embodiment of the invention;
Figure 7 is a cross-sectional view of the first embodiment of the invention;
Figures 8a to 8d show a series of steps undertaken by the first embodiment of the invention in going from a closed and locked condition to a released condition;
Figures 9a and 9b show details of internal locking components of the first embodiment of the invention during unlocking;
Figure 10 shows the action of forces within the first embodiment of the invention;
Figure 11 shows a body component of the first embodiment of the invention;
Figure 12 shows a locking lever component of the first embodiment of the invention;
Figures 13a and 13b show features of a basket component of the first embodiment of the invention;
Figures 14a and 14b show details of internal locking components of the first embodiment of the invention in a partially released state;
Figures 15a and 15b show a safety switch of the first embodiment of the invention in a locked and an unlocked state;
Figure 16 is a variation on the first embodiment of the invention in which the safety switch incorporates a locking bolt;
Figure 17 shows a remote release connected to the first embodiment of the invention;
Figures 18a to 18c show a series of steps undertaken by the first embodiment of the invention in during attachment to a carabiner;
Figures 19a to 19c show the attachment sequence in cross-section;
Figure 20 illustrates an anti cross-loading feature of the first embodiment of the invention;
Figure 21 shows a swivel boss assembly attached to an attachment end of the first embodiment of the invention;
Figure 22 shows a swivel carabiner attached to a release end of the first embodiment of the invention; and
Figures 23 and 24 show a modification to the embodiment of Figures 1 to 22, with the basket component respectively in a closed and an open position.

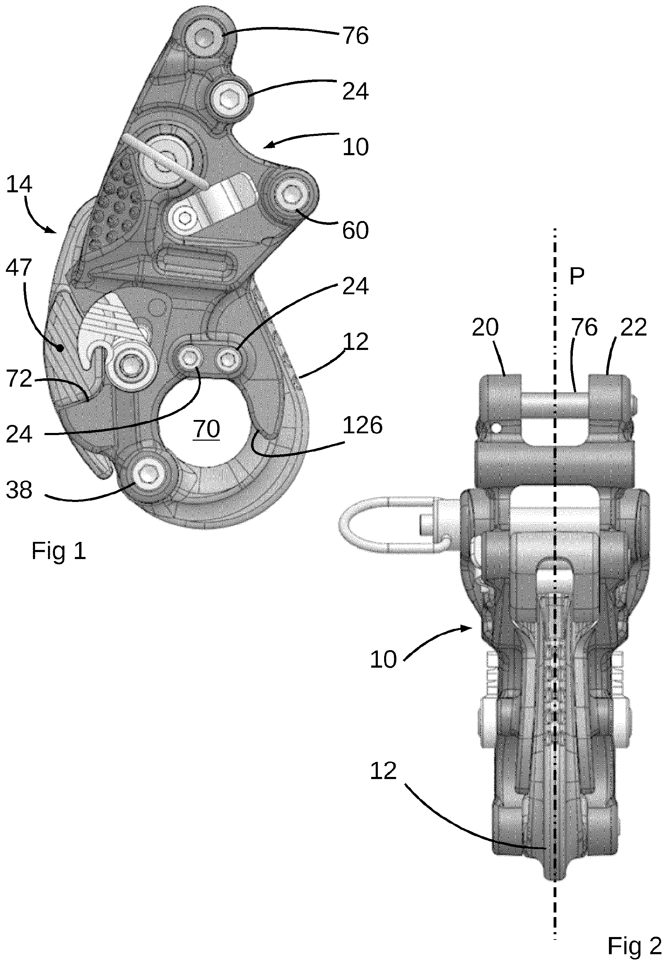

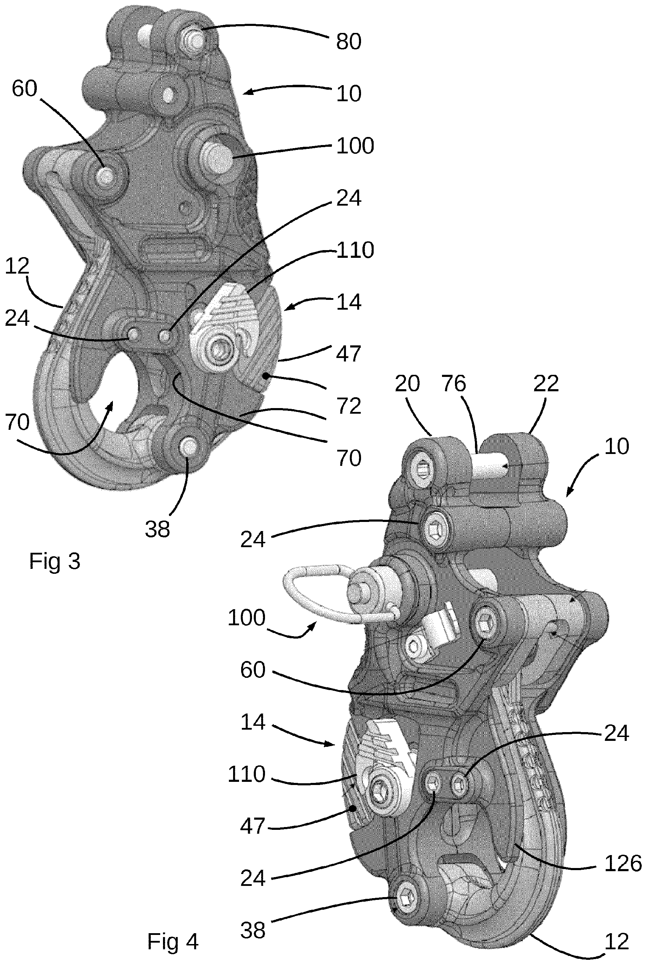

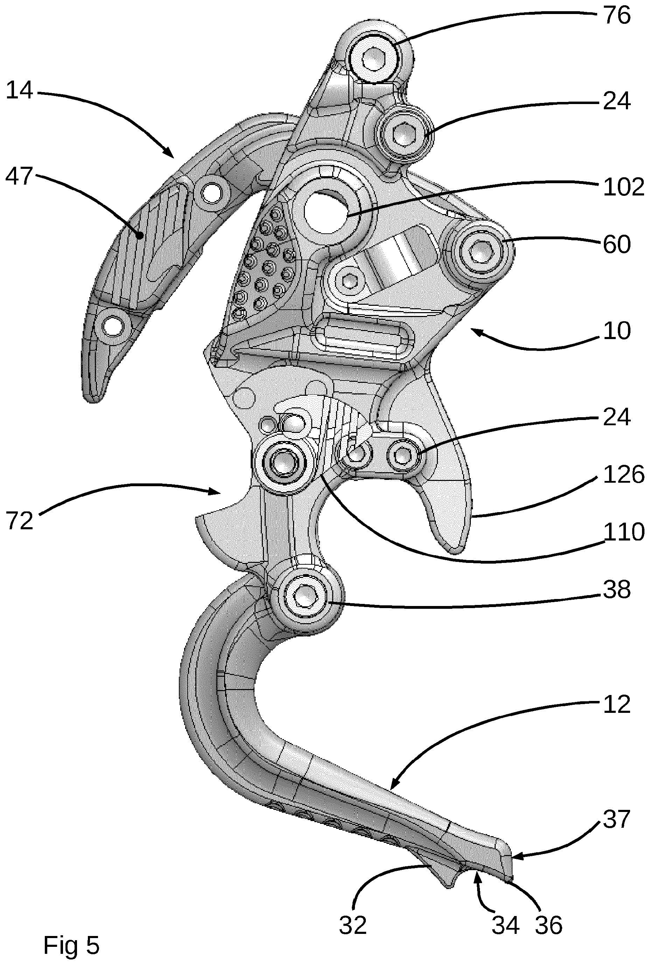

With reference to the drawings, a connector being a first embodiment of the invention is shown in Figures 1 to 4 in a closed and locked condition and Figure 5 shows the connector in an unlocked and open condition.

The principal components of the connector are a body 10, a basket 12, and a locking lever 14.

The body 10 is formed from first and second plate components 20, 22 that are connected together and which make contact with one another at a contact plane P. (This is a feature of the present embodiment: in others, the body may be one-piece.) The body is approximately symmetrical about the contact plane P. One feature of the plates that is asymmetrical is that the first plate 20 includes a plurality of countersunk bores that extend perpendicular to the contact plane P and the second plate includes a plurality of threaded bores, each of which, in the assembled body 10, the bores are coaxial with one another. This allows suitable threaded fasteners to be passed through the apertures in the first plate 20 into engagement with the threads of the second plate 22. Selection of the diameter and depth of the counterbores and the heads of the fasteners can ensure that the heads do not project from the first plate 20. Instead of being threaded, some of the apertures in the second plate 22 have a section that opens to an outer surface of the second plate 22 may have a hexagonal shape to receive a nut with which a fastener passed through the first plate 20 can engage. Note that some or all of the fasteners may be riveted instead of being threaded.

In this embodiment, there are three fasteners that are cap screws 24 which are secured within a tapped bore in the second plate, which fasteners serve to clamp the first and second plates 20, 22 together.

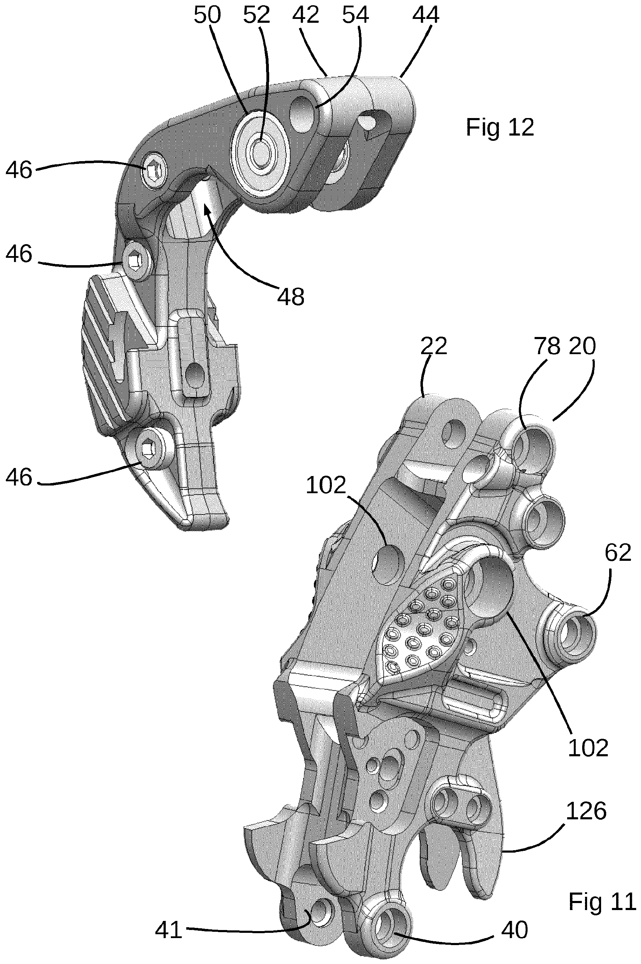

The basket 12 is generally J-shaped (its shape will be described in greater detail below, with respect to Figures 11a and 11b) having an approximately straight, but tapering, stem portion and a curved bight portion. When installed in the connector, the basket 12 is symmetrical about the contact plane P. The curved bight portion extends to a connection end of the basket 12 at which a pivot bore 30 is formed through the basket 12 perpendicular to the contact plane P. The stem portion extends to a locking end formation that includes a rib 32 which projects in the contact plane P. The rib 32 has a locking surface 34 that is concave, arcuate and faces towards a tip 36 of the basket 12. The tip 36 is formed with a radius that is small, as will be discussed below. An end surface 37 of the basket 12 extends from the tip at an angle of about 30° to the length of the stem portion.

The basket 12 is located between the plates 20, 22 of the body 10 by a basket axle 38. The basket axle 38 has a head with a socket to receive a hex key from which a cylindrical shaft extends, an end portion of the shaft being externally threaded. The head is received within a counterbore 40 in the first plate 20. The shaft passes through the pivot bore 30 of the basket 12 and its threaded portion is retained within a tapped hole 41 of the second plate 22. The shaft is a close fit within the pivot bore 30, such that the basket 12 can pivot freely around the basket axle 38 within the contact plane P, but substantially constrained against movement out of the contact plane P.

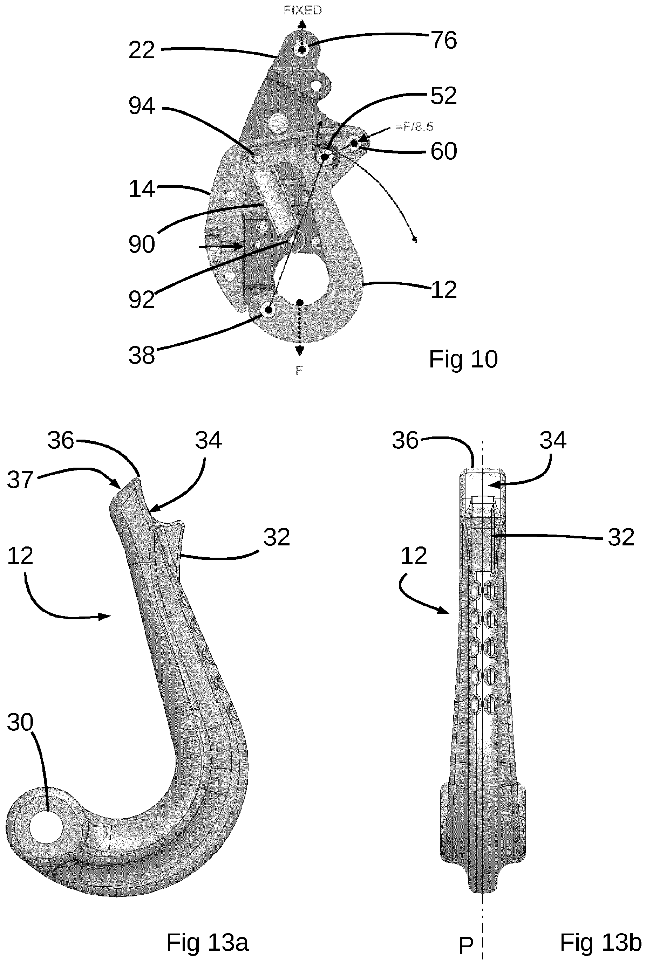

As will be seen in Figures 13a and 13b, the basket 12 tapers in two directions away from the basket axle 38. This ensures that a component surrounding it can slide readily from it when the basket 12 is moved to the open position.

The locking lever 14 includes a lever shell that is formed from first and second lever plates 42, 44 interconnected by bolts 46. The lever plates 42, 44 make contact with one another in a plane that is coincident with the contact plane P in the assembled connector. Each bolt 46 passes through a hole in the first lever plate 42 and is received in a tapped hole in the second lever plate 44. As with the body 10, the locking lever might be formed in one piece in other embodiments.

The locking lever 14 is very approximately an inverted L-shape in profile having first and second lengths that extend roughly at right-angles to one another. In the first length, the lever plates 42, 44 are predominantly in contact with one another. In the second length, they are spaced apart by a void 48. In the region of the void 48, each lever plate 42, 44 has a respective counterbored opening, which openings are coaxial with one another. A rolling-element bearing 50 is located within each counterbore, and a cylindrical locking shaft 52 extends between the bearings. Adjacent to the counterbores, a pivot bore 54 extends through the lever plates 42, 44. Part of the first length of the locking lever has an external surface 47 upon which grooves are formed to assist a user in gripping the lever.

In the assembled connector, the release lever is secured between the plates 20, 22 of the body 10 by a lever axle 60. The basket axle 38 has a head with a socket to receive a hex key from which a cylindrical shaft extends, an end portion of the shaft being externally threaded. The head is received within a conterbore 62 in the first plate 20. The shaft passes through the pivot bore 54 of the locking lever 14 and its threaded portion is retained within a tapped hole of the second plate 22. The shaft is a close fit within the pivot bore 54, such that the locking lever 14 can pivot freely around the lever axle 60 within the contact plane P, but substantially constrained against movement out of the contact plane P.

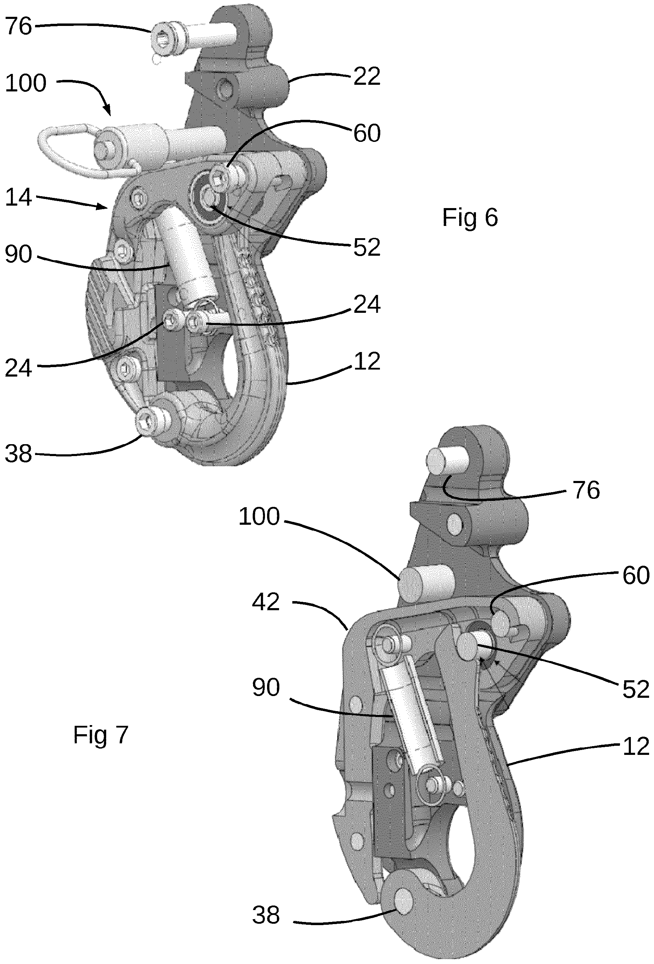

The basket 12 can pivot about the basket axle 38 between a closed position (shown in Figures 1 to 4, 6 and 7) and an open position (shown in Figure 5). In the closed position, the stem of the basket 12 lies between the plates 20, 22 of the body 10 and the curved bight portion projects from the plates 20, 22 of the body 10. A recess 70 is formed in the plates 20, 22 of the body 10 in a position that lies adjacent to the curved bight portion when the basket 12 is in the closed position. This region of the connector will be referred to as the "release end". In combination, the curved bight portion when the basket 12 and the recess 70 form a through passage through which a rope, cable, carabiner or other component can be passed, the curved bight portion of the basket 12 serving as a load-bearing member that transmits force from a connected component into the body 10.

The locking lever 14 can be pivoted about the lever axle between a locking position (shown in Figures 1 to 4, 6 and 7) and an unlocking position (shown in Figure 5). In the locking position, with the basket 12 in the closed position, the locking shaft 52 of the locking lever is in contact with the locking surface 34 of the basket 12, which prevents the basket component 12 from pivoting away from the closed position. The grooved portion of the locking lever 14 is exposed by a recess 72 in the plates 20, 22, the lever otherwise being entirely between the plates 20, 22.

A user can grasp the grooved portion 47 of the locking lever 14 and pull the lever out from between the plates to cause the locking lever 14 to pivot about the lever axle 60. This causes the locking shaft 52 to separate its contact from the basket 12, which allows the basket 12 to pivot from between the plates 20,22. This allows anything within the through passage formed between the basket 12 and the recess 70 to separate from the connector.

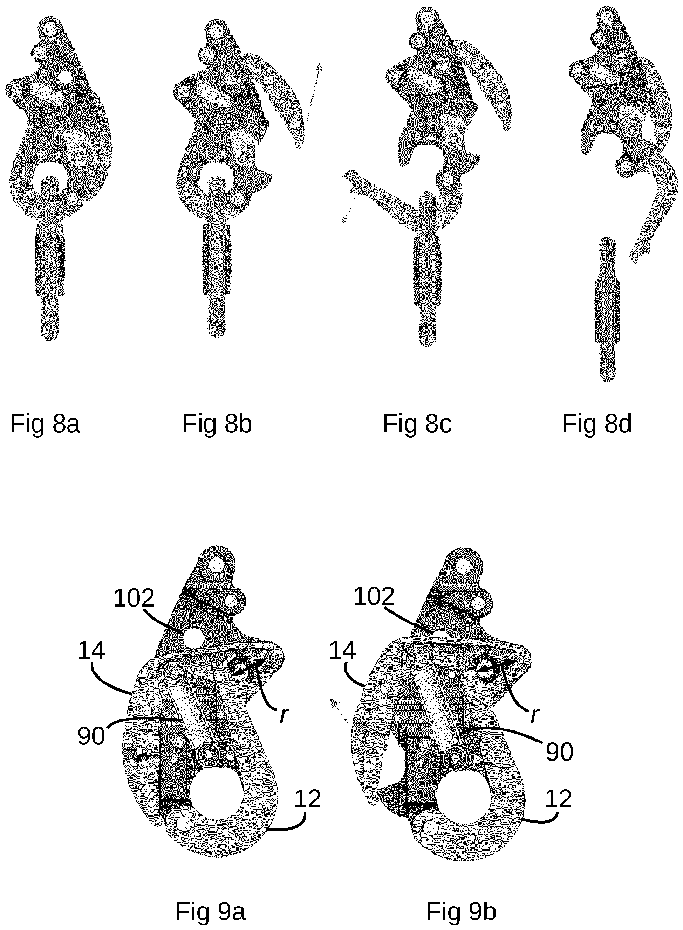

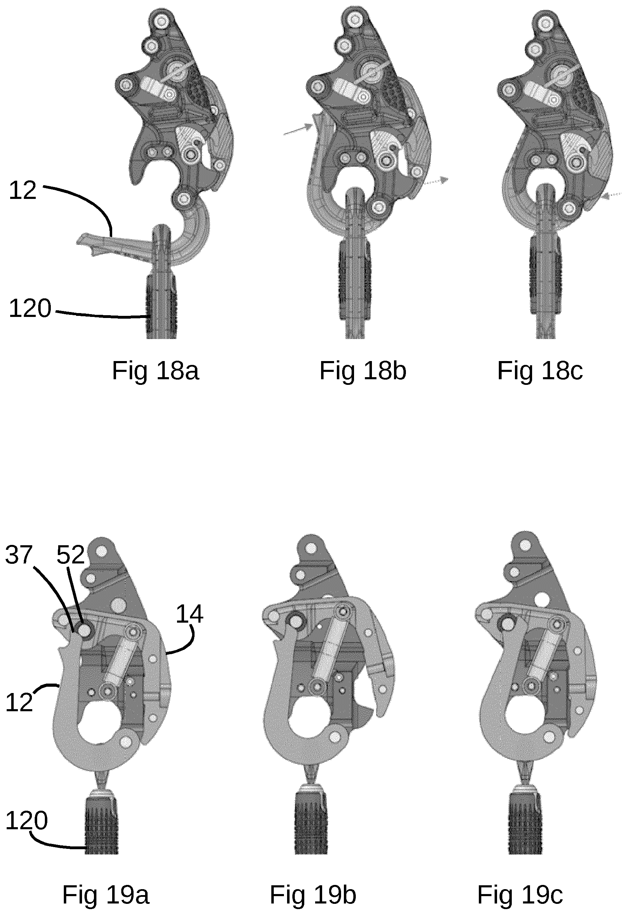

The sequence of releasing the locking lever 14 and opening the basket 12 is shown in Figures 8a to 8d, and the internal reconfiguration of the components of the connector are shown in Figures 9a and 9b. The reverse of this is shown in Figures 18a to 18c and 19a to 19c, which shows a carabiner 120 being connected to the basket 12 of the connector. As the basket 12 approaches the closed position, its end surface 37 makes contact with the locking shaft 52, as shown in Figure 19a. The surface 37 applies a force to the locking shaft 52 which causes the locking lever 14 to be displaced from the locked position, as in Figures 18b and 19b, thereby allowing the basket 12 to pass the locking shaft 52 to attain the closed position, as in Figures 18c and 19c.

During locking and release, the action of the connector is smooth, consistent and repeatable due to the profile the roller transitions through during movement of the lever pull. An important design feature is that the locking surface 34 of the lever 14 has its arc centred on the lever axle 60, so that as the lever moves, the locking shaft 52 moves along an arc at a constant distance from the locking surface 34, as shown in Figures 9a and 9b. In these figures, the distance r is substantially constant as the lever 14 moves from the locking position until release takes place. This means that the locking shaft can 52 roll along the locking surface 34 with a minimum of friction and without causing the basket 12 to rotate on the basket axle 38. This also ensures that the lever 14 must be pulled a considerable distance before release actually takes place: this ensures that release is a definite action by the user and not accidental.

An attachment axle 76 extends between the plates to serve as a first attachment point. The attachment axle 76 has a head with a socket to receive a hex key from which a cylindrical shaft extends, an end portion of the shaft being externally threaded. The head is received within a counterbore 78 in the first plate 20. The shaft passes through the pivot bore 30 of the basket 12 and its threaded portion is retained within a nut 80 located in a hexagonally-shaped recess in the second plate 22. This region of the connector will be referred to as the "fixed end".

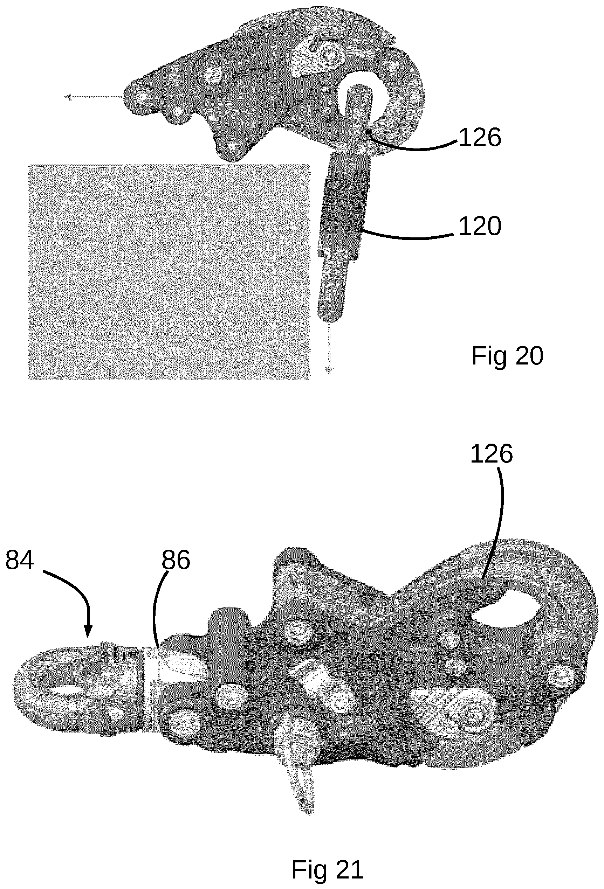

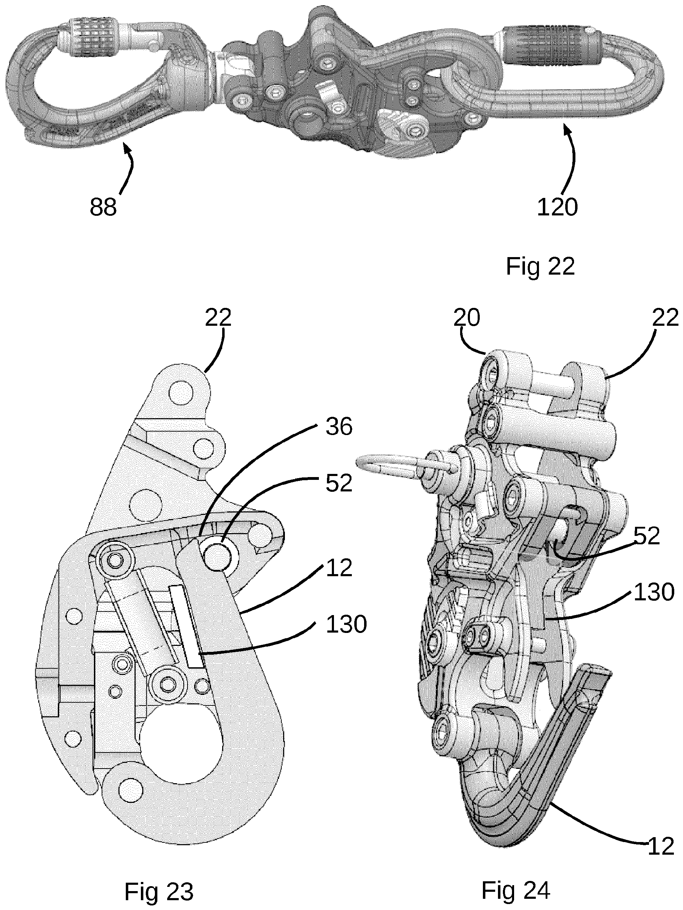

The attachment axle 76 can be used to connect a wide range of components to the connector. For example, in Figure 21, a swivel eye assembly 84 is shown connected to the attachment axle 76, the shaft of the attachment axle 76 passing through a through bore of a boss 86 of the swivel assembly 84. In the arrangement shown in Figure 22, the swivel eye assembly 84 is replaced with a swivel carabiner 88. EP-A-3 323 474 discloses a range of alternative devices that can be connected to the connector by the attachment axle 76. In the context of that application, the attachment axle 76 and the adjacent plates 20, 22 provide a yoke formation.

Figure 10 shows the forces that act within the connector. If the connector is fixed at the attachment axle 76 and a force F is applied to the basket 12 in a direction directly away from the attachment axle 76, a couple is applied to the basket about the basket axle 12 acting about the basket axle 38. This couple is resisted to maintain the basket in the closed position by the locking shaft 52 applying a reaction force to the locking surface 34, which force acts through the lever axle 60. In this embodiment, the magnitude of the reaction force is F/8.5. Note that the magnitude of the reaction force as a fraction of the load being carried by the connector is primarily determined by the geometry of the basket 12. It is chosen such that the reaction force is not too high as to make it difficult for a user to move the lever from the locked position, yet it must not be great enough that the basket 12 moves rapidly to the open position under the load on the basket 12 when the locking lever 14 is unlocked.

The following table summarises the forced required to release the connector of this embodiment under a variety of loads.

| **Load F (kg)** | **Release ok by hand?** | **Release force (kg)** |
|---|---|---|
| 50 | Very easy | 0.90 |
| 100 | Very easy | 0.90 |
| 150 | Easy | 1.50 |
| 200 | Easy | 2.0 |
| 250 | Easy | 2.8 |
| 300 | Easy | 3.8 |

The above describes the basic operation of the connector. Various refinements will now be described.

In the first embodiment described above, the locking shaft 52 is carried on a pair of bearings 50 to keep the rotational friction of the locking shaft to a minimum, allowing the locking shaft to rotate over the locking surface 34 rather than sliding over it In embodiments intended for lesser loadings, the bearings 50 could be interchanged for other friction reducing elements such as bushings. Alternatively, the locking shaft 52 could be fixed to slide over the locking surface 34, preferably in the presence of a lubricant

It will be seen that the connector works in the same manner as a normal carabiner: once attached to a system, it will not release until the operator requires. However, the connector *can be* released under load when required by the user or a remote operator. The device can attach to any other product providing the basket will fit through its attachment eye or other attachment component and the release function is not impinged or restricted.

The above describes the principal components of the connector embodying the invention and their operation. There are several additional components that enhance its operation, which will now be described.

A tension spring 90 is connected between a bolt 92 that passes through the first plate 20 of the body to be received within a tapped hole of the second plate 22 of the body 10, and another bolt 94 which passes through the first lever plate 44 to be received within a tapped hole of the second lever plate 44. When the lever 14 is in the locked position, the spring is under a preload tension. As the lever 14 is pivoted about the lever axle 60 away from the locked position, the spring 90 is extended such that the tension in the spring 90 increases. This has the effect of urging the lever 14 towards the locked position.

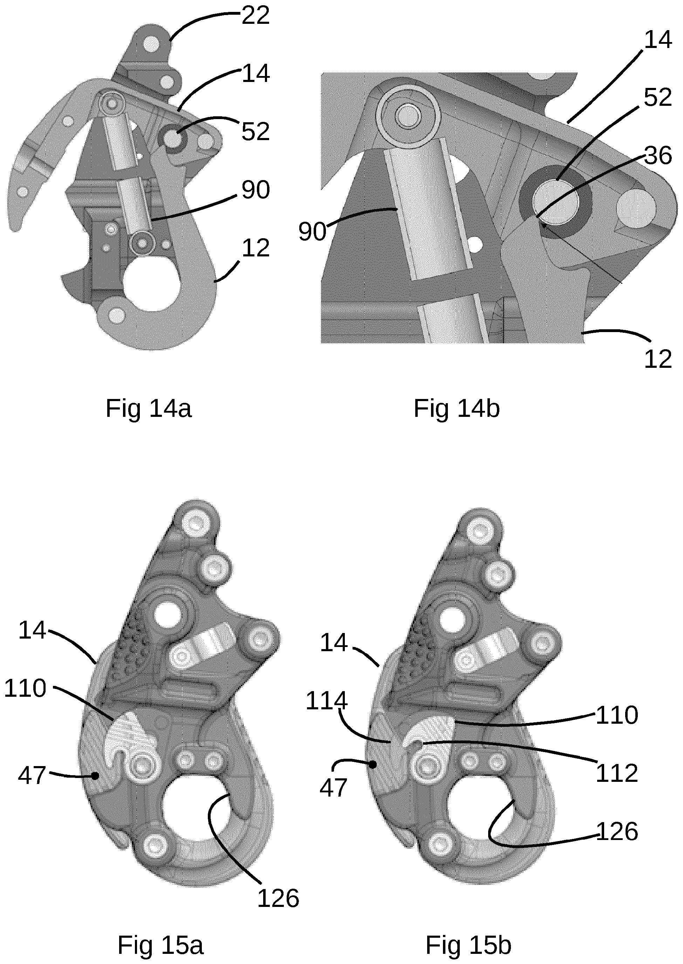

Should the lever 14 be in a position in which it is between the locked and the unlocked positions, as shown in Figures 14a and 14b, the action of the spring is such that the lever will tend to return to the locked position. From Figure 14b, it will be seen that the tip 36 of the gate 12 has a radius that is significantly smaller that the radius of the locking shaft 52. This means that it will not tend to rest in an intermediate, indeterminate position such as is shown in Figures 14a and 14b; instead it will definitely move either towards the locked position or to the unlocked position, which gives a user certainty as to the locked or unlocked status of the connector.

As described hitherto, all that is required to unlock the connector is to move the lever 14 from the locking position. For most applications, this is not a safe configuration. Therefore, this embodiment is provided with several locking arrangements, one or more of which will be present in many practical embodiments. These will now be described.

The embodiment further includes a locking pin 100. The functional part of the locking pin 100 is a shaft that can be inserted into coaxial holes 102 in the plates 20, 22, which is a close fit within the holes 102. When the lever 14 is in the locking position, the shaft can be inserted into the holes to lie immediately adjacent to the lever. Thus, the shaft prevents the lever 14 from moving from the locked position. Once the pin is removed, its shaft no longer prevents movement of the lever 14. As can be seen in Figure 5, when the lever 14 is in the unlocked position, it partially obstructs the holes 102 to prevent replacement of the pin until the lever 14 returns to the locking position.

In this embodiment, the locking pin is a quick-release "pip pin", of a type common in the aircraft industry, for example in accordance with standard NASM 17984. The shaft extends from a head from which a release button protrudes. Unless the release button is pressed, locking detents project from the shaft to prevent its insertion into or removal from the holes 102. However, the details of the locking mechanism for the locking pin 100 are not critical to the invention, provided that positive locking and unlocking can be achieved.

In addition, this embodiment includes a safety lever 110 on each of the plates 20,22 (although just one can provide a safety locking function). One of these is shown in more detail in Figures 15a and 15b; the other is essentially a mirror-image of the lever on the other plate.

The safety lever 110 is carried on a pin for rotation of its plate 20 about an axis normal to the contact plane P. The safety lever 110 has an arcuate slot 112 that extends from an outer edge and which is centred on the axis of rotation. A co-operating recess 114 is formed within into the grooved portion 47 of the locking lever 14. The safety lever 110 can rotate about an angle of approximately 45° between an unlocked position, shown in Figure 15b, in which it is spaced from the locking lever 14 and a locked position, shown in Figure 15a, in which a part of the safety lever 110 adjacent to its slot 112 enters the recess 114 in the locking lever 14. This activates the safety lever to prevent rotation of the locking lever 14 from the locking position, the safety lever 110 effectively acting as a hook to keep the locking lever 14 in place.

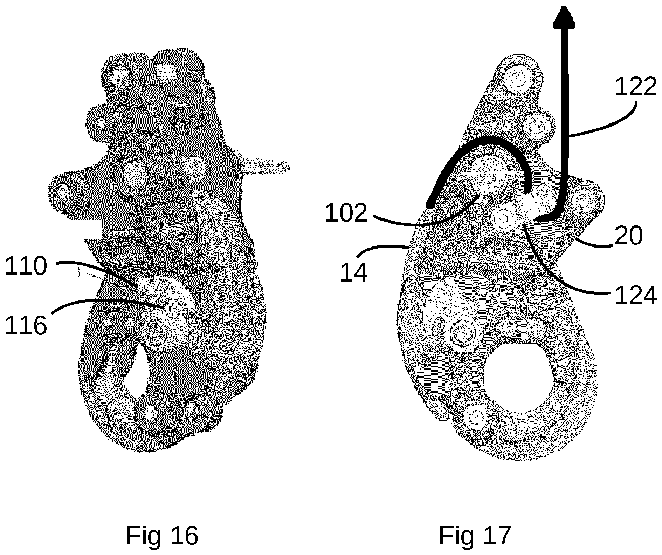

Optionally, a removable bolt 116 can be inserted with its shaft extended through the arcuate slot 112 of the safety lever 110 into a tapped hole in the body 10. This allows the safety lever 110 to be locked out of use in the unlocked position, as shown in Figure 16. A reason for doing this is to enable remote control of the connector using a cord 122 attached to the locking lever 14, as shown in Figure 17. To provide a remote release, the cord 122 is guided around a boss that surrounds the locking pin hole 102 and under a spring clip 124 that is secured to the first plate 20 of the body 10. The spring clip 124 serves to resist movement of the cord 122 to guard against the possibility of accidental release.

All carabiners and similar connectors have a loading axis along which the connector should be loaded. If the connector is loaded along any other axis, it is less able to resist loading forces and may be subject to damage during use. In that event, the connector is said to be "cross loaded". While cross-loading is potentially harmful for any connector, cross-loading an embodiment of the invention may increase the load applied to the locking pin 52 and the locking lever 14. An example of cross-loading is shown in Figure 20.

To minimise the risk that cross-loading will cause damage, the plates 20,22 include projecting extensions 126 between which the stem of the basket extends when in the closed position. These extensions 126 define part of the periphery of the recess, whereby an object placed within the recess will make contact with the extensions 126, instead of the basket 12, when in a cross-loading position.

A modification to the above embodiment is shown in Figures 23 and 24. In this embodiment, an abutment plate 130 extends perpendicularly between the first and second plate components 20, 22. When in the closed position, further movement of the basket 12 in a direction away from the open position (that is, into the body 10) is limited or prevented by the stem portion of the basket 12 coming into contact with the abutment plate 130. The abutment plate is disposed such that when such contact occurs, it takes place along a length of the stem portion extending from close to the tip 36. Under extreme overloading, the force of the locking shaft 52 acting on the tip 36 of the basket 12 could cause the tip 36 to bend. The presence of the abutment plate 130 diminishes the possibility that such bending could cause the tip 36 to pass the locking shaft 52 to allow the basket to open.

The body 10 in the above-described embodiments are formed from two bolted plate components 20, 22. However, the bolts may be substituted by rivets or other fasteners, removable or permanent Alternatively, the body could be formed as a single components. Similar alternative arrangements may apply to other components such as the locking lever.

## Claims

1. A connector comprising:
a. a body (10);
b. a basket (12) that is pivotable about a basket axis between a closed position in which it forms a closed loop with the body (10) and an open position in which it has a free end that projects from the body;
c. a locking member (14) that is operable to retain the basket in the closed position; **characterised in that**:
d. a loading force applied to the basket (12) is resisted by the locking member (14) which is disposed to act on the basket with a mechanical advantage over the loading force.

2. A connector according to claim 1 in which the basket has a curved bight portion from which a stem extends.

3. A connector according to claim 1 or claim 2 in which a pivot axle connects the basket to the body close to a free end portion of the curved bight portion.

4. A connector according to any preceding claim in which the basket is configured such that a loading force applied to the bight applies a couple to the basket about the basket axis in a first direction while the locking member applies a couple to the basket about the basket axis in an opposite direction, but the couple is applied by the locking element at a distance from the pivot axle greater than the distance of the loading force.

5. A connector according to any preceding claim in which, in the closed position, the locking member makes contact with a locking surface close to a free end of the stem.

6. A connector according to any preceding claim in which the locking element is carried on a locking lever, the locking lever being pivotally connected to the body, and pivotable about a locking axis movable between a locked position and an unlocked position, the locking axis being parallel to the basket axis.

7. A connector according to claim 6 in which the locking surface is arcuate and centred upon the locking axis.

8. A connector according to claim 6 or claim 7 further including a removable locking pin, which pin, when in place on the connector, prevents movement of the locking lever.

9. A connector according to any one of claims 6 to 8 further including a safety lever carried on the body that can be activated by moving it to a locked position in which it prevents movement of the locking lever.

10. A connector according to any preceding claim in which the locking element is a cylinder mounted for rotation about an axis that is parallel to the basket axis.

11. A connector according to any preceding claim which further includes an attachment point that is fast with the body, the attachment point including an axle that extends between two webs.

12. A connector according to any preceding claim in which the basket tapers in cross-section in a direction away from the basket axis.

13. A connector according to any preceding claim that includes a tension spring that urges the locking lever towards the locking position.

14. A connector according to any preceding claim in which the locking member is disposed to act on the basket with a mechanical advantage over the loading force by a factor of 4, 8 or more.

15. A connector according to any preceding claim in which the body includes an abutment that prevents or limits movement of the basket into the body past the closed position.
